# NOUVEAU FASCICULE DE BREVET EUROPEEN

(11) **EP 0 643 361 B2**
(45) Date de publication et mention de la décision concernant l'opposition: **04.09.2002**
(45) Mention de la délivrance du brevet: 02.02.2000
(21) Numéro de dépôt: 94401997.5
(22) Date de dépôt: 08.09.1994
(51) Int. Cl.: G06K 7/06

(54) **Terminal électronique avec lecteur pour carte à mémoire**
Elektronischer Terminal mit Speicherkartenleser
Electric terminal with memory card reader

(30) Priorité: 14.09.1993 FR 9310911
(43) Date de publication de la demande: 15.03.1995
(73) Titulaire: SOCIETE D'APPLICATIONS GENERALES D'ELECTRICITE ET DE MECANIQUE SAGEM, 75783 Paris Cédex 16 (FR)
(72) Inventeur: Sarradin, Jean-Louis, F-95190 Fontenay en Parisis (FR)
(74) Mandataire: Bloch, Gérard

(56) Documents cités:
- EP-A- 0 274 302
- EP-A- 0 480 334
- FR-A- 2 685 967

## Description

L'usage des cartes à mémoire, et en particulier à puce, s'étend actuellement à de nombreuses applications, telles que le paiement électronique, le contrôle d'accès ou les communications mobiles par radio.

Pour utiliser un terminal d'une application donnée, un utilisateur introduit sa carte dans le terminal qui effectue la lecture de données mémorisées dans la puce, afin de vérifier la validité de la carte, et qui, selon l'application, y inscrit le coût de l'opération, par exemple le coût d'un appel téléphonique.

Pour cette lecture, le terminal comporte un lecteur de carte à puce comprenant un logement de réception de la carte, dans lequel sont disposés des contacts agencés pour coopérer avec une plage de connexion de la carte à puce.

Le logement est limité par des parois de guidage de la carte à puce, si bien que son encombrement est bien supérieur à celui de la carte à puce qu'il reçoit. Or, il est souvent souhaitable que le terminal soit de taille réduite, surtout s'il est portatif.

La présente invention vise à réduire l'encombrement de ce logement.

A cet effet, l'invention concerne un terminal électronique selon la revendication 1.

On remarquera que le terminal de l'invention est beaucoup plus simple que celui de EP-A-0 480 334, grâce au fait que le logement de réception de la carte à mémoire est limité aussi par le circuit imprimé. Quant à EP-A-0 274 302, il enseigne aussi un lecteur mais qui est monté dans une machine à paroi très particulière.

EP-A-0 319 108 décrit un terminal électronique comprenant un boîtier comportant un logement de réception d'une carte à puce, ledit logement étant limité par un circuit imprimé, un clavier et un afficheur, le boîtier comportant également des parois latérales pourvues de moyens de guidage de la carte dans le logement.

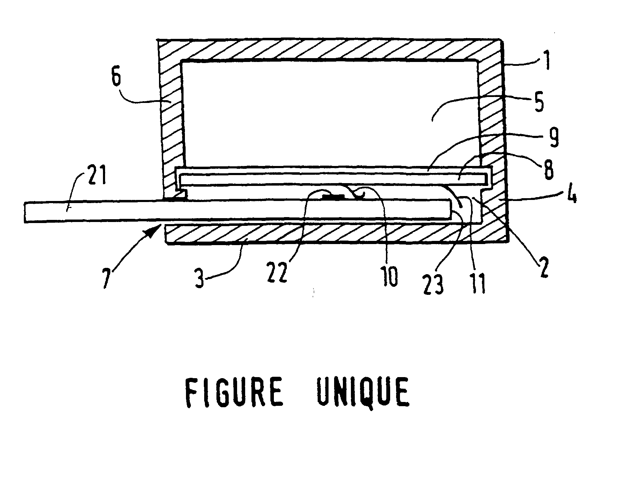

L'invention sera mieux comprise à l'aide de la description suivante de la forme de réalisation préférée du terminal de l'invention, en référence à la figure unique du dessin annexé qui en représente une vue latérale en coupe.

Le terminal électronique qui va être décrit comporte un boîtier 1, ici de forme globalement parallélépipédique rectangle, comportant un logement 2 de réception d'une carte à mémoire, ici une carte à puce 21. Le logement 2, de taille juste suffisante pour recevoir, au moins partiellement, la carte à puce 21, est limité par une paroi de fond 3, une paroi arrière 4 et deux parois latérales, dont une seule, 5, est représentée, du boîtier 1. Une fente 7 dans la paroi avant 6 du boîtier 1 permet l'introduction de la carte à puce 21 dans le logement 2. Du côté opposé à la paroi de fond 3, le logement 2 est limité par une carte électronique en circuit imprimé 8 fixée au boîtier 1, ici au moyen de rainures 9 formées dans le boîtier 1.

La carte électronique 8 porte un ensemble de contacts 10 disposés pour coopérer avec une plage de connexion 22 de la carte à puce 21. Les contacts 10 sont des lamelles élastiques faisant légèrement saillie dans le logement 2. En présence de la carte, les lamelles 10 sont repoussées par la face de la carte à puce 21 tournée vers la carte 8. A proximité de la paroi arrière 4, la carte électronique 8 porte un détecteur 11 de présence de carte, ici sous forme d'une lame souple faisant saillie dans le logement 2 et destinée à être repoussée contre un contact associé et ainsi fournir un signal de présence de carte, lorsque le bord antérieur 23 de la carte à puce 21 s'approche de la paroi de fond 4 avant de venir en butée contre elle. Dans cette position, la plage de connexion 22 de la carte à puce 21 coopère avec les contacts 10. On notera qu'un détecteur similaire était enseigné par FR-A-2 685 967.

En exploitation, le boîtier 1 assure ainsi un guidage de la carte à puce 21, ici sur trois côtés, et la carte électronique 8 limite le logement 2 et guide donc aussi la carte à puce 21. Le signal du détecteur 11 sert à activer des circuits de lecture/écriture de la carte électronique 8 reliés aux contacts 10.

Le détecteur 11 de présence de carte aurait aussi pu être monté sur le boîtier 1, par exemple sur la paroi arrière 4, et être relié par fils à la carte 8.

## Revendications

1. Terminal électronique comprenant un boîtier (1) comportant un logement (2) limité par au moins une paroi (3-5) du boîtier (1), le logement étant agencé pour recevoir une carte (21) à mémoire et à plage de connexion (22), et le logement étant de taille juste suffisante pour recevoir, au moins partiellement, ladite carte, et le terminal comprenant un circuit imprimé (8) portant des moyens de connexion (10) permettant la coopération entre ces moyens de connexion (10) et la plage de la carte (21), le logement (2) étant limité par une paroi de fond (3), une paroi arrière (4) et deux parois latérales (5) du boîtier ainsi que par le circuit imprimé (8).

2. Terminal selon la revendication 1, dans lequel il est prévu un détecteur (11) de présence de carte agencé pour coopérer avec un bord antérieur (23) de la carte à mémoire (21).

## Patentansprüche

1. Elektronisches Terminal mit einem Gehäuse (1), welches einem Aufnahmeraum (2) umfaßt, der durch zumindest eine Wand (3-5) des Gehäuses (1) begrenzt ist, wobei der Aufnahmeraum dafür eingerichtet ist, eine Speicherkarte mit einem Anschlußbereich (22) aufzunehmen und wobei der Aufnahmeraum eine Größe hat, die gerade ansreicht um zumindest teilweise die sagenannte karte aufzunehmen und wobeil das Terminal eine Leiterplatte (8) umfaßt, die Anschlußmittel (10) trägt, so daß ein Zusammenwirken zwischen den Anschlußmitteln (10) und dem Anschlußbereich der Karte (21) möglich ist, wobei der Aufnahmeraum (2) durch eine Badewand (3), eine Rückwand (4) und zwei Seitenwände (5) des Gehäuses sowohl wie durch die Leiterplatte (8) begrenzt ist.

2. Terminal nach Anspruch 1, **dadurch gekennzeichnet, daß** eine Einrichtung (11) zum Erfassen des Vorhandenseins einer Karte vorgesehen ist, die dazu eingerichtet ist, mit einer Vorderkante (23) der Speicherkarte (21) zusammenzuwirken.

## Claims

1. Electronic terminal comprising a casing (1) providing a housing (2) limited by at least one wall (3-5) of the casing (1), the housing being arranged to receive a memory card (21) having a connection area (22) and the housing being just large enough to take at least part of said card and the terminal comprising a printed circuit (8) supporting connection means (10) allowing the cooperation between these connection means (10) and the area of the card (21), the housing (2) being limited by a bottom wall (3), a back wall (4) and two side walls (5) of the casing as well as by the printed circuit (8).

2. Terminal according to claim 1, in which a means (11) is provided for detecting the presence of a card, which is arranged to cooperate with a front edge (23) of the memory card (21).
